Europäisches Patentamt

European Patent Office

Office européen des brevets

(11) Publication number: **0 402 119**
**A1**

# EUROPEAN PATENT APPLICATION

(21) Application number: **90306162.0**

(22) Date of filing: **06.06.90**

(51) Int. Cl.⁵: **B23D 33/00**

(30) Priority: **08.06.89 GB 8913230**

(43) Date of publication of application:
**12.12.90 Bulletin 90/50**

(84) Designated Contracting States:
**AT BE CH DE DK ES FR GB GR IT LI LU NL SE**

(71) Applicant: **J. McIntyre (Machinery) Limited**
**Harrimans Lane**
**Dunkirk Nottingham NG7 2SD(GB)**

(72) Inventor: **Gramley, Alan Geoffrey**
**c/o J McIntyre (Machinery) Ltd. Harrimans**
**Lane**
**Dunkirk Nottingham NG7 2SD(GB)**

(74) Representative: **Goodman, Christopher et al**
**Eric Potter & Clarkson St. Mary's Court St.**
**Mary's Gate**
**Nottingham NG1 1LE(GB)**

(54) **Machine guard.**

(57) A guard (100) for a metal cutting shear comprises a combination of a guard (100) and an adjustable hold down device (50), the hold down device (50) being adjusted to suit the size of metal being sheared and the guard (100) therefore being automatically adjusted to guard the operator from the jaws (10, 20) of the shear without any interference of the insertion of the metal being cut.

Fig. 3

EP 0 402 119 A1

## MACHINE GUARD

The present invention relates to a machine guard and more particularly to a guard for a metal cutting shear.

In the.present invention the guard is combined with an adjustable hold down device attached to the shear and is thereby automatically adjusted in position to suit the size of metal being cut by the shear.

According to the present invention there is provided a combination machine guard and hold down device for a shear, the guard comprising a cage, the cage comprising a rigid frame characterised in that the cage is rigidly affixed to an adjustable hold down device and is automatically adjustable in height with the hold down device.

Embodiments of the present invention will now be described, by way of example with reference to the accompanying drawings in which

Figure 1 shows in elevation the operating jaw part of a shear;

Figure 2 shows a plan view of Figure 1;

Figure 3 shows a guard according to the present invention in side elevation; and

Figure 4 shows the guard of Figure 3 in plan view.

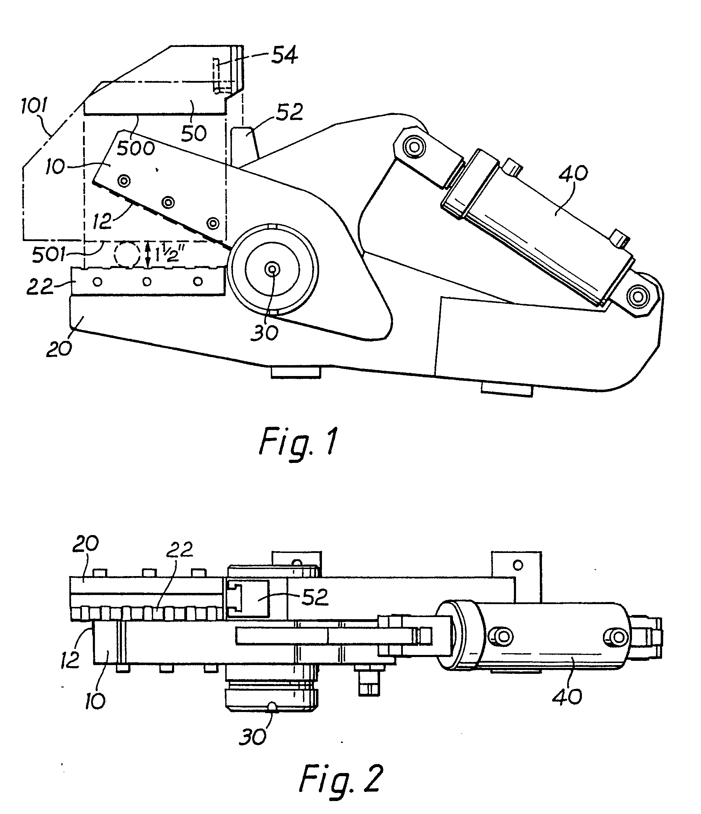

With reference to the drawings the shear of Figures 1 and 2 is of known type and will only be described briefly. The shear comprises upper and lower jaws 10, 20 fitted with replaceable blades 12, 22 and operable about a pivot 30 by a hydraulic ram 40 to open and close to cut material inserted therein. The controls and hydraulics are not material to the invention and will, therefore, not be described further.

The jaws 10, 20 are very powerful and preferably a guard is required. In previous designs such guards have been large and hinged to be lowered on use of the machine. They have been cumbersome and large and difficult to use.

In the present invention the guard is combined with the hold down device as follows. The hold down device 50 is fitted into a slide 52 and is adjustable in height within the slide 52 by a locking lever 54 which operates on the slide 52 in known manner (lever 54 is shown diagrammatically and is dotted in Figure 1 because it is on the far side of the hold down plate 50).

The hold down device can be lowered in Figure 1 until it is at a desired height to suit material to be cut. In Figure 1 this is exemplified by the dotted line 501 representing the bottom edge 500 of the hold down 50 set at 1 1/2″ (4 cm.) above jaw 22 to enable 1 1/2″ bar to be cut. The hold down prevents "kicking up" of the bar.

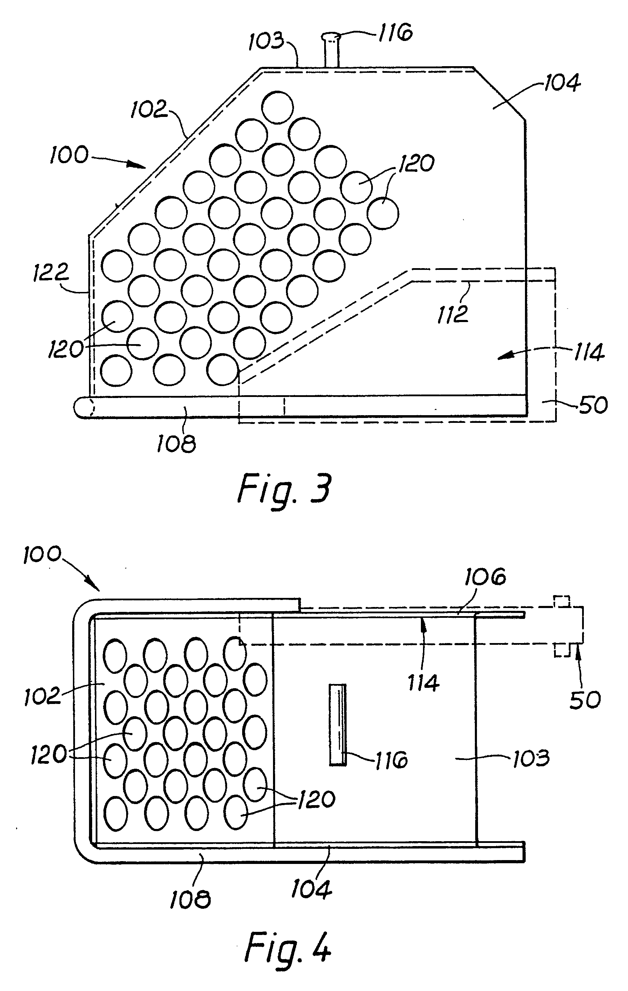

In the present invention the guard shown in Figures 3 and 4 is incorporated with the hold down 50. The guard which comprises a generally rectangular shaped cage 100 with a sloping front 102, flat top 103 and straight sides 104, 106 is made of sheet steel and is reinforced by a round bar frame member 108 preferably of steel bar which extends round the guard. The guard 100 is welded to the hold down 50 as indicated by the dotted line 112 the hold down 50 thereby "filling" in the open triangular portion 114. The position of the hold down device is indicated dotted in Figures 3 and 4. A suitable lifting handle 116 is provided for lifting the guard and also the hold down. The guard is therefore automatically adjusted in height to suit the material being cut; the guard thereby always being at the correct height for the material and never interfering with the entry of the material in the jaws 10, 20. For the example given for 1 1/2″ (4 cm.) bar the guard 100 will be in the position indicated by chain-dot line 101 in Figure 1. It is clear that the guard gives good protection for the operator whilst allowing easy access for the bar to be cut.

The guard can readily be removed by unlocking hold down 50 and merely lifting it clear to provide access to jaws 10, 20 for maintenance. The guard is provided with numerous holes 120 on all sides 104, 106, front 122 and sloping front 102 to enable the operator to ensure correct operation of the shear. The guard, being made of sheet matter and preferably of steel of for example 3 mm thickness and reinforcing bar 108 of 3/4″ (12 mm.) is very strong and is affixed to hold down 50 which is also very strong. Thus the guard though simple is very rigid, not easily damaged but is easy to adjust and remove if desired.

## Claims

1. A combination machine guard and hold down device for a shear the guard comprising a cage 100, the cage comprising a rigid frame 108, characterised in that the cage 100 is rigidly affixed to an adjustable hold down device 50 and is automatically adjustable in height with the hold down device 50.

2. A combination machine guard and hold down device for a shear as claimed in Claim 1 characterised in that the rigid frame 108 is welded 112 to the hold down device 50.

3. A combination machine guard and hold down device for a shear as claimed in Claim 2 characterised in that the cage 100 is a generally rectangular box shape comprising a flat top 103, straight sides 104, 106 and a sloping front 102, 122 and in that the rear side of the cage 100 and the underneath side of the cage 100 are open to allow the cage when in use to be fitted over operating jaws 10, 20 of a shear.

4. A combination machine guard and hold down device for a shear as claimed in Claim 3 characterised in that the rigid frame 108 comprises a metal bar 108, and in that the top 103 sides 104, 106 and sloping front 102, 122 are formed from sheet steel.

5. A combination machine guard and hold down device for a shear as claimed in Claim 4 characterised in that the sloping front 102, 122 and sides 104, 106 are provided with a plurality of holes 120 through the sheet metal to enable the operator to observe the shearing action therethrough.

6. A combination machine guard and hold down device for a shear as claimed in Claim 5 characterised in that a lifting handle 116 is attached to the flat top 104.

7. A combination machine guard and hold down device for a shear as claimed in Claim 6 characterised in that the hold down device 50 is adjustable in height above a lower jaw 20 of the shear, in that the hold down device is slideably mounted in a slide 52, in that the hold down device 50 includes locking means 54 to lock the hold down device 50 and the cage 100 in a fixed position relative to the lower jaw 20 and in that the hold down device 50 is formed to be, in its unlocked condition, detachable from the slide 52 to allow removal of the hold down device 50 and cage 100 from the shear.

8. A combination machine guard and hold down device for a shear as claimed in Claim 7 characterised in that the rigid frame 108 is made of steel bar of 12 mm diameter and the top 103, sides 104, 106 and sloping front are made of steel plate Of 3 mm thickness all parts being welded together.

Fig. 1

Fig. 2

Fig. 3

Fig. 4

| | DOCUMENTS CONSIDERED TO BE RELEVANT | | EP 90306162.0 |
|---|---|---|---|
| Category | Citation of document with indication, where appropriate, of relevant passages | Relevant to claim | CLASSIFICATION OF THE APPLICATION (Int Cl⁵) |
| X | <u>FR - A - 1 078 245</u> (ETABLISSEMENTS SIRUGUE & CIE) * Totality * | 1,2 | B 23 D 33/00 |
| A | | 5 | |
| A | <u>SU - A1 - 1 253 749</u> (AZOV) * Totality * & SOVIET INVENTIONS ILLUSTRATED, P section, week 8716, February 25, 1986 DERWENT PUBLICATIONS LTD., London + SU-1 253 749 (AZOV) + | 1,7 | |
| A | <u>WO - A1 - 86/03 701</u> (BLOM) ---- | | |

| | TECHNICAL FIELDS SEARCHED (Int Cl⁵) |
|---|---|
| | B 23 D 17/00 B 23 D 27/00 B 23 D 29/00 B 23 D 31/00 B 23 D 33/00 |

The present search report has been drawn up for all claims

| Place of search | Date of completion of the search | Examiner |
|---|---|---|
| VIENNA | 14-08-1990 | KRUMPSCHMID |

EPO Form 1503 03 82